# EUROPÄISCHE PATENTSCHRIFT

(11) **EP 0 992 462 B1**
(45) Veröffentlichungstag und Bekanntmachung des Hinweises auf die Patenterteilung: **09.05.2001**
(21) Anmeldenummer: 99114396.7
(22) Anmeldetag: 22.07.1999
(51) Int. Cl.: C03C 3/093, C03C 3/095

(54) **Borosilicatglas hoher chemischer Beständigkeit und dessen Verwendung**
Borosilicate glass of high chemical resistance and its application
Verre de Borosilicate ayant une haute résistance chimique, et son utilisation

(30) Priorität: 18.09.1998 DE 19842942
(43) Veröffentlichungstag der Anmeldung: 12.04.2000
(73) Patentinhaber: Schott Glas, 55122 Mainz (DE); CARL-ZEISS-STIFTUNG trading as SCHOTT GLAS, 55122 Mainz (DE)
(72) Erfinder: Kunert, Christian, 55118 Mainz (DE); Brix, Peter, Dr., 55116 Mainz (DE)

(56) Entgegenhaltungen:
- EP-A- 0 765 847

## Beschreibung

Die Erfindung betrifft ein zirconiumoxid- und lithiumoxidhaltiges Borosilicatglas hoher chemischer Beständigkeit sowie dessen Verwendung.

Für Glas-Metall-Verschmelzungen, die in chemisch korrosiver Umgebung, z. B. im Chemieanlagen- oder Reaktorenbau, eingesetzt werden, werden Gläser benötigt, die eine sehr hohe Beständigkeit sowohl gegenüber sauren als auch gegenüber alkalischen Medien aufweisen. Zudem müssen solche Einschmelzgläser in ihrem thermischen Ausdehnverhalten an die verwendeten chemisch hochbeständigen Metalle bzw. Legierungen angepaßt sein. Dabei ist es erwünscht, daß der lineare thermische Ausdehnungkoeffizient nahe bei bzw. geringfügig unter dem des einzuschmelzenden Metalls liegt, damit sich im Glas beim Abkühlen der Verschmelzung Druckspannungen aufbauen, die zum einen eine hermetische Abdichtung garantieren und zum anderen den Aufbau von Zugspannungen im Glas, welche das Auftreten von Spannungsrißkorrosion fördem würden, verhindern. Bei der Verwendung von Fe- Ni- Co-Legierungen, z. B. Vacon® 11 mit einem thermischen Ausdehnungskoeffizienten α_{20/300} von 5,4 x 10⁻⁶/K, oder Zirconium (α_{20/300} = 5,9 x 10⁻⁶/K) oder Zirconiumlegierungen werden als Einschmelzgläser für Glas-Metall-Verschmelzungen Gläser mit einem Ausdehnungskoeffizienten α_{20/300} zwischen 5,2 und 5,7 x 10⁻⁶/K benötigt.

Ein wesentlicher Parameter zur Charakterisierung der Verarbeitbarkeit eines Glases ist die Verarbeitungstemperatur V_{A}, bei der die Viskosität des Glases 10⁴ dPas beträgt. Sie soll niedrig sein, da bereits geringfügige V_{A}-Erniedrigungen zu einer deutlichen Senkung der Herstellkosten führen, da die Schmelztemperaturen abgesenkt werden können. Darüber hinaus ist auch bei der Herstellung der Glas-Metall-Verschmelzung ein möglichst niedriger V_{A} von Vorteil, da dann eine Überhitzung der zu verschmelzenden Teile vermieden werden kann, weil entweder bei niedrigerer Temperatur oder in kürzerer Zeit verschmolzen werden kann. Schließlich kann bei der Verwendung von Gläsern mit niedrigerem VA vermieden werden, daß es durch Verdampfung und Rückkondensation von Glaskomponenten zu einer Störung der Verschmelzung und im ungünstigsten Fall zu undichten Verschmelzungen kommt. Weiter ist auch das Verarbeitungsintervall eines Glases, d. h. die Temperaturdifferenz von der Verarbeitungstemperatur V_{A} bis zur Erweichungstemperatur E_{W}, der Temperatur, bei der die Viskosität des Glases 10^{7,6} dPas beträgt, wesentlich. Der Temperaturbereich, in dem ein Glas verarbeitet werden kann, wird auch als "Länge" des Glases bezeichnet.

In der Patentliteratur sind bereits Gläser beschrieben, die hohe chemische Beständigkeiten aufweisen, jedoch nicht in Kombination mit dem gewünschten Ausdehnungskoeffizienten bei gleichzeitig niedriger Verarbeitungstemperatur.

Die Patentschrift DE 42 30 607 C 1 stellt chemisch hoch resistente Borosilicatgläser vor, die mit Wolfram verschmelzbar sind. Sie besitzen Ausdehnungskoeffizienten α_{20/300} von höchstens 4,5 x 10⁻⁶/K.

Auch die in der Offenlegungsschrift DE 37 22 130 A1 beschriebenen Borosilicatgläsern und die in der Patentschrift DD 301 821 A 7 beschriebenen zirkonhaltigen Borosilicatgläser besitzen eine für die Verschmelzung mit den genannten hoch beständigen Metallen zu niedrige Dehnung von höchstens 5,0 x 10⁻⁶/K bzw. 5,2 x 10⁻⁶/K

Die Gläser der Patentschrift DE 44 30 710 C1 weisen einen hohen SiO₂-Anteil, nämlich > 75 Gew.-% und > 83 Gew.-% SiO₂ + B₂O₃ in Verbindung mit einem Gewichtsverhältnis SiO₂/B₂O₃ > 8, und wenig Al₂O₃ auf, was sie zwar chemisch hoch beständig macht jedoch zu nachteilig hohen Verarbeitungstemperaturen führt.

Auch die Gläser der Patentschrift DE 195 35 708 C1 sind aufgrund ihres hohen SiO₂-Gehaltes chemisch hoch beständig, weisen jedoch ebenfalls unvorteilhaft hohe Verarbeitungstemperaturen und niedrige Wärmedehnungen auf. Zudem wird eine Abnahme der Laugenbeständigkeit mit sinkendem SiO₂/B₂O₃-Verhältnis, also auch mit sinkendem SiO₂-Gehalt, beschrieben.

Es ist nun Aufgabe der Erfindung, ein Glas zu finden, das die genannten hohen Anforderung sowohl an die chemische Beständigkeit als auch an die Verarbeitbarkeit erfüllt und das einen thermischen Ausdehnungskoeffizienten besitzt, der ausreichend dichte Verschmelzungen mit den genannten Metallen und Legierungen ermöglicht.

Diese Aufgabe wird durch das in Patentanspruch 1 beschriebene Glas gelöst.

Das erfindungsgemäße Glas unterscheidet sich von den bekannten chemisch hoch beständigen Gläsern durch einen niedrigen SiO₂-Gehalt von 71 bis < 73 Gew.-%, bevorzugt nur bis 72,5 Gew.-%. Es war völlig überraschend, daß Gläser mit so wenig SiO₂ sowohl eine so hohe Säurebeständigkeit als auch eine so hohe Laugenbeständigkeit besitzen, daß sie jeweils der ersten Beständigkeitsklasse angehören, da man bisher davon ausging, daß bei Absenken des SiO₂-Gehaltes keine so guten Beständigkeiten erreicht werden können. Der relativ niedrige SiO₂-Gehalt wirkt sich vorteilhaft auf die gewünschten Eigenschaften niedrige Verarbeitungstemperatur und relativ hoher thermischer Ausdehnungkoeffzient aus.

Das erfindungsgemäße Glas enthält wenigstens 5,5 Gew.-%, bevorzugt wenigstens 6 Gew.-%, besonders bevorzugt wenigstens 6,5 Gew.-%, und höchstens 9 Gew.-%, bevorzugt höchstens 8,5 Gew.-%, Al₂O₃. Durch diese verhältnismäßig hohen Gehalte ist das Glas sehr kristallisationsstabil, was die großtechnische Herstellung erleichtert. Bei höheren Gehalten würde jedoch lediglich die Schmelztemperatur steigen, ohne daß die Kristallisationsbeständigkeit weiter verbessert würde.

Das Glas enthält 7 bis 10 Gew.-%, vorzugsweise wenigstens 7,5 Gew.-%, B₂O₃ zur Erniedrigung der Schmelztemperatur bei gleichzeitiger Verbesserung der chemischen Beständigkeit. Während bei niedrigeren Gehalten die Schmelztemperatur nicht weit genug abgesenkt würde, würde bei höheren Gehalten die Säurebeständigkeit verschlechtert.

Das gleichzeitige Vorhandensein von Li₂O (0,5 bis 2 Gew.%, bevorzugt bis 1,5 Gew.-%, besonders bevorzugt 0,7 bis 1,4 Gew.-%) und ZrO₂ (wenigstens 0,8 Gew.-%, bevorzugt wenigstens 0,9 Gew.-%, höchstens 3 Gew.-%, bevorzugt höchstens 2 Gew.-%) trägt wesentlich zur hervorragenden chemischen Beständigkeit bei, wobei insbesondere ZrO₂ zur Verbesserung der Laugenbeständigkeit führt. Der Li₂O-Anteil wirkt dabei einer durch ZrO₂ hervorgerufenen Anhebung der Schmelz- und Verarbeitungstemperaturen entgegen. Bei einem Li₂O-Gehalt über 2 Gew.-% würde zwar die Schmelztemperatur sinken, die hydrolytische Beständigkeit sich jedoch verschlechtern und würde das Glas verteuert. Bei einem ZrO₂-Gehalt von mehr als 3 Gew.-% würden die Schmelz- und Verarbeitungstemperaturen zu sehr ansteigen. Außerdem steigt mit hohen ZrO₂-Gehalten die Gefahr von Glasfehlern, da möglicherweise Partikel des schwerlöslichen ZrO₂-Rohstoffes unaufgeschmolzen bleiben und ins Produkt gelangen.

Die weiteren Alkalioxide Na₂O und K₂O können jeweils mit bis zu 10 Gew.-% vorhanden sein und dienen dann ebenfalls zur Senkung der Schmelz- und Verarbeitungstemperatur. Dabei soll der Gesamtalkaligehalt (Li₂O + Na₂O + K₂O) 10,5 Gew.-% nicht überschreiten, da insbesondere die hydrolytische Beständigkeit abnehmen würde. Bevorzugt ist der Gehalt der stets fakultativen Komponente K₂O auf 6 Gew.-%, besonders bevorzugt auf 4 Gew.-% beschränkt. Na₂O ist bevorzugt mit 3 bis 7,5 Gew.-%, ganz besonders bevorzugt mit 3,5 bis 7,2 Gew.-% vorhanden.
Dabei beträgt die Summe der drei Alkalioxide in bevorzugter Ausführung 3,5 bis 10,5 Gew.-% und in besonders bevorzugter Ausführung 7 bis 9,5 Gew.-%.

Als weitere Komponenten kann das Glas die zweiwertigen Oxide MgO mit 0 - 2 Gew.-%, bevorzugt 0 - 1 Gew.-%, CaO mit 0 - 3 Gew.-%, vorzugsweise 0 - 2 Gew.-%, SrO mit 0 - 3 Gew.-%, BaO mit 0 - 3 Gew.-% und ZnO mit 0 - 3 Gew.-%, vorzugsweise 0 - 1 Gew.-%, enthalten. Diese Komponenten variieren die "Länge des Glases", also den Temperaturbereich, in dem das Glas verarbeitbar ist. Durch die unterschiedlich stark netzwerkwandelnde Wirkung dieser Komponenten kann durch den Austausch dieser Oxide gegeneinander das Viskositätsverhalten an die Anforderungen des jeweiligen Herstellungs- und Verarbeitungsverfahrens angepaßt werden. Außerdem verbessern insbesondere CaO und ZnO die Säurebeständigkeit. Die Summe aus den Erdalkalioxiden und ZnO soll zwischen 0 und 3 Gew.-% betragen, da bei höheren Gehalten die Entglasungsneigung steigen kann. In bevorzugter Ausführung ist das Glas SrO-, BaO- und ZnO-frei und enthält 0,5 - 2 Gew.-% CaO bei 0 - 1 Gew.-% MgO, wobei die Summe aus CaO und MgO ebenfalls 0,5 - 2 Gew.-% beträgt.

Weiter kann das Glas farbgebende Komponenten, bevorzugt Fe₂O₃, Cr₂O₃, CoO, mit jeweils bis zu 1 Gew.-% enthalten, wobei auch die Summe dieser Komponenten 1 Gew.-% nicht überschreiten soll. Das-Glas kann auch bis zu 3 Gew.-% TiO₂ enthalten. Diese Komponente wird bevorzugt dann eingesetzt, wenn bei speziellen Einsatzgebieten des Glases eine Beschädigung einer Glas-Metall-Verschmelzung durch UV-Strahlung oder die Freisetzung von UV-Strahlung verhindert werden soll.

Das Glas kann bis zu 1 Gew.-% CeO₂ enthalten. In niedrigen Konzentrationen wirkt CeO₂ als Läutermittel, in höheren Konzentrationen verhindert es die Verfärbung des Glases durch radioaktive Strahlung. Mit einem solchen CeO₂-haltigen Glas ausgeführte Verschmelzungen können daher auch nach radioaktiver Belastung noch visuell auf eventuelle Beschädigungen wie Risse oder Korrosion des Leitungsdrahtes kontrolliert werden. Noch höhere CeO₂-Konzentrationen verteuern das Glas und führen zu einer unerwünschten gelbbräunlichen Eigenfärbung. Für Verwendungen, bei denen die Fähigkeit, durch radioaktive Strahlung bedingte Verfärbungen zu vermeiden, nicht wesentlich ist, ist ein CeO₂-Gehalt zwischen 0 und 0,3 Gew.-% bevorzugt.

Das Glas kann mit üblichen Läutermitteln wie As₂O₃, Sb₂O₃, dem bereits erwähnten CeO₂, NaCI, CaF₂ oder NaF geläutert werden, die in üblichen Mengen, d. h. je nach Menge und verwendetem Typ des Läutermitteis in Mengen von 0,05 bis 1 Gew.-%, im fertigem Glas anzutreffen sind.

### Beispiele

Es wurden acht Beispiele erfindungsgemäßer Gläser aus üblichen Rohstoffen erschmolzen.

Die Gläser wurden folgendermaßen hergestellt: Die Rohstoffe wurden abgewogen und gründlich gemischt. Das Glasgemenge wurde bei ca. 1620 °C eingeschmolzen und anschließend in Stahlformen gegossen.

In Tabelle 1 sind die jeweilige Zusammensetzung (in Gew.-% auf Oxidbasis), der thermische Ausdehnungkoeffizient α _{20/300} [10⁻⁶/K], die Transformationstemperatur T_{g} [°C], die Erweichungstemperatur E_{W}, die Verarbeitungstemperatur V_{A} [°C], die Dichte [g/cm³] und die Hydrolytische, die Säure- und die Laugenbeständigkeit der Gläser angegeben.

Die chemischen Beständigkeiten wurden folgendermaßen bestimmt:
- die Hydrolytische Beständigkeit H nach DIN ISO 719. Angegeben ist jeweils das Basenäquivalent des Säureverbrauchs als µg Na₂O / g Glasgrieß. Der maximale Wert für ein chemisch hoch resistentes Glas der Hydrolytischen Klasse 1 sind 31 µg Na₂O/g.
- die Säurebeständigkeit S nach DIN 12116. Angegeben ist jeweils der Gewichtsverlust in mg/dm². Der maximale Abtrag für ein säurebeständiges Glas der Säureklasse 1 sind 0,70 mg/dm².
- Die Laugenbeständigkeit L nach DIN ISO 695. Angegeben ist jeweils der Gewichtsverlust in mg/dm². Der maximale Abtrag für ein Glas der Laugenklasse 1 (schwach laugenlöslich) beträgt 75 mg/dm².

Die Anforderungen der jeweiligen Klasse 1 sind bei den erfindungsgemäßen Gläsern erfüllt. Mit H = 1, S = 1 und L=1 weisen sie hervorragende chemische Beständigkeiten auf.

Ihre niedrigen Verarbeitungstemperaturen V_{A} von höchstens 1175 °C charakterisieren ihre gute Verarbeitbarkeit.

Damit sind die erfindungsgemäßen Gläser hervorragend geeignet für alle Anwendungszwecke, bei denen chemisch hoch beständige Gläser benötigt werden, z. B. für Laboranwendungen, für Chemieanlagen, beispielsweise als Rohre, und für Behälter für medizinische Zwecke, für Pharmaprimärpackmittel wie Ampullen oder Fläschchen. Auch als Mantelglas für Glasfasern sind sie sehr gut geeignet.

Die Gläser besitzen einen thermischen Ausdehnungskoeffizienten α_{20/300} zwischen 5,2 und 5,7 x 10⁻⁶/K. Damit ist ihre lineare Ausdehnung gut an die von Fe-Co- Ni- Legierungen, z. B. Vacon® 11 (α_{20/300} = 5,4 x 10⁻⁶/K), und an Zirconium (α_{20/300} = 5,9 x 10⁻⁶/K) angepaßt, und die Gläser sind für Glas-Metall-Verschmelzungen mit diesen chemisch hoch beständigen Metallen bzw. Legierungen geeignet. Mit ihrer eigenen hohen chemischen Beständigkeit sind sie daher besonders geeignet für Glas-Metall-Verschmelzungen, die in chemisch korrosiver Umgebung eingesetzt werden, z. B. im Chemieanlagen- oder Reaktorenbau, oder auch als Druckschaugläser, Gläser für Schaufenster in Stahldruckgefäßen, in denen auch chemisch aggressive Substanzen unter Druck gehalten werden.

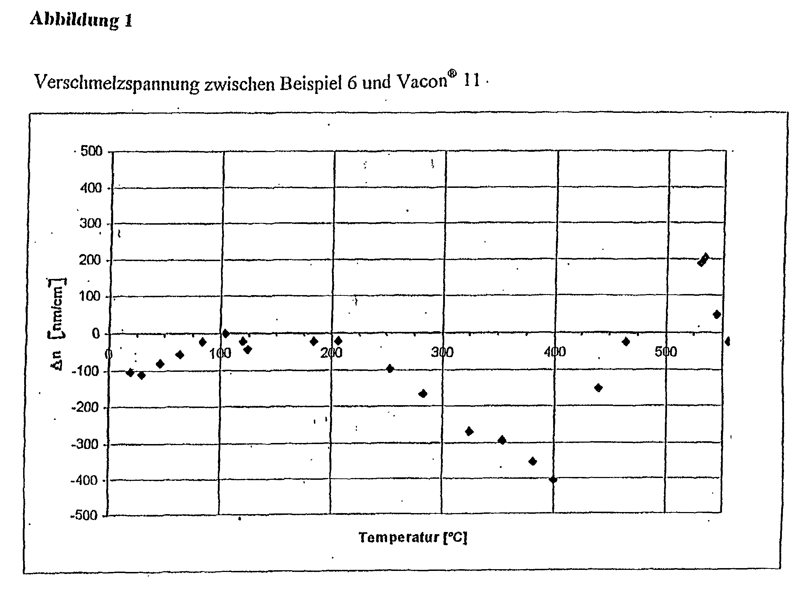

Zur Verdeutlichung der guten Anpassung der erfindungsgemäßen Gläser an Kontaktmaterialien, d. h. an Materialien, insbesondere Metalle, die für elektrische Kontakte und Leitungen in Glas-Metall-Durchführungen und - Verschmelzungen eingesetzt werden, zeigt Abbildung 1 die Spannung in einer Verschmelzung zwischen dem Glas Nr. 6 (s. Tabelle 1) und Vacon® 11, einer Legierung aus 29% Ni, 18% Co, Rest Fe, in Abhängigkeit von der Temperatur. Dabei wird'zur Charakterisierung der Spannung einer Verschmelzung die Spannungsdoppelbrechung von Glas ausgenutzt, also die Tatsache, daß Glas unter Zug- oder Druckbelastung sein Brechungsverhalten ändert. Meßgröße, angegeben in nm/cm, ist der Gangunterschied, der zwischen einem polarisierten Lichtstrahl, der durch die zu untersuchende Probe gedrungen ist, und einem Referenzstrahl auftritt. Dabei bedeuten negative Zahlenwerte Druckspannungen. Bei einer solchen Verschmelzung ist erwünscht, daß im Glas Druckspannungen und keine oder nur geringe Zugspannungen auftreten. Dies ist in der dargestellten Verschmelzung bis ca. 450 °C erfüllt. Somit treten auch beim Einsatz der Verschmelzung bis 450 °C keine für das Glas schädliche Zugspannungen auf, die zu einer Beschädigung der Verschmelzung führen könnten.

**Tabelle 1**

| Zusammensetzungen (in Gew.-% auf Oxidbasis) erfindungsgemäßer Gläser und wesentliche Eigenschaften der Gläser | | | | | | | | |
|---|---|---|---|---|---|---|---|---|
| | **1** | **2** | **3** | **4** | **5** | **6** | **7** | **8** |
| **SiO**_{**2**} | 71,00 | 71,00 | 71,00 | 71,24 | 71,75 | 71,75 | 72,50 | 72,50 |
| **B**_{**2**}**O**_{**3**} | 9,80 | 9,12 | 10,00 | 8,62 | 9,45 | 8,90 | 7,50 | 8,65 |
| **Al**_{**2**}**O**_{**3**} | 7,36 | 6,19 | 6,37 | 8,50 | 7,50 | 7,00 | 8,20 | 7,50 |
| **Li**_{**2**}**O** | 1,20 | 1,20 | 1,00 | 1,00 | 0,70 | 1,30 | 1,40 | 1,20 |
| **Na**_{**2**}**O** | 4,44 | 3,92 | 4,60 | 7,16 | 6,05 | 5,45 | 6,84 | 5,78 |
| **K**_{**2**}**O** | 2,50 | 4,00 | 3,50 | -- | 1,60 | 1,60 | 0,36 | 1,88 |
| **MgO** | - | 1,00 | -- | -- | - | -- | -- | -- |
| **CaO** | 1,80 | 1,58 | 1,80 | 1,48 | 1,80 | 1,80 | 1,19 | 0,50 |
| **ZrO**_{**2**} | 1,91 | 2,00 | 1,73 | 2,00 | 0,95 | 2,00 | 2,00 | 2,00 |
| **CeO**_{**2**} | -- | -- | -- | -- | 0,20 | 0,20 | -- | -- |
| **α**_{**20/300**}**[10**^{**-6**}**/K]** | 5,22 | 5,51 | 5,50 | 5,50 | 5,44 | 5,42 | 5,60 | 5,41 |
| **T**_{**g**} **[°C]** | 544 | 543 | 549 | 547 | 551 | 540 | 538 | 543 |
| **E**_{**w**}**[°C]** | 771 | 771 | 767 | 766 | 787 | 765 | 761 | 771 |
| **V**_{**A**}**[°C]** | 1166 | 1168 | 1156 | 1155 | 1167 | 1144 | 1151 | 1170 |
| **ρ[g/cm**^{**3**}**]** | 2,37 | 2,30 | 2,38 | 2,39 | 2,37 | 2,38 | 2,39 | 2,38 |
| **H[µg Na**_{**2**}**O/g]** | 10 | 13 | 10 | 12 | 12 | 10 | 12 | 8 |
| **S [mg/dm**^{**2**}**]** | 0,63 | 0,61 | 0,55 | 0,60 | 0,60 | 0,60 | 0,47 | 0,62 |
| **L [mg/dm**^{**2**}**]** | 65 | 55 | 65 | 55 | 71 | 62 | 49 | 54 |

## Patentansprüche

1. Zirconiumoxid- und lithiumoxidhaltiges Borosilicatglas hoher chemischer Beständigkeit,
**gekennzeichnet durch**
eine Zusammensetzung (in Gew.-% auf Oxidbasis) von:
| | |
|---|---|
| SiO₂ | 71 - <73 |
| B₂O₃ | 7 - 10 |
| Al₂O₃ | 5,5 - 9 |
| Li₂O | 0,5 - 2 |
| Na₂O | 0 - 10 |
| K₂O | 0 - 10 |
| mit Li₂O + Na₂O + K₂O | 0,5 - 10,5 |
| MgO | 0 - 2 |
| CaO | 0 - 3 |
| SrO | 0 - 3 |
| BaO | 0 - 3 |
| ZnO | 0 - 3 |
| mit MgO+CaO+SrO+BaO+ZnO | 0 - 3 |
| ZrO₂ | 0,8 - 3 |
| CeO₂ | 0 - 1 |
sowie ggf. übliche Läutermittel in üblichen Mengen

2. Borosilicatglas nach Anspruch 1,
**gekennzeichnet durch**
eine Zusammensetzung (in Gew.-% auf Oxidbasis) von:
| | |
|---|---|
| SiO₂ | 71 - <73 |
| B₂O₃ | 7 - 10 |
| Al₂O₃ | 6 - 8,5 |
| Li₂O | 0,5 - 1,5 |
| Na₂O | 3 - 7,5 |
| K₂O | 0 - 6 |
| mit Li₂O + Na₂O + K₂O | 3,5 - 10,5 |
| MgO | 0 - 2 |
| CaO | 0 - 2 |
| SrO | 0 - 3 |
| BaO | 0 - 3 |
| ZnO | 0 - 3 |
| mit MgO+CaO+SrO+BaO+ZnO | 0 - 3 |
| ZrO₂ | 0,9 - 2 |
| CeO₂ | 0 - 1 |
sowie ggf. übliche Läutermittel in üblichen Mengen

3. Borosilicatglas nach Anspruch 1 oder 2,
**gekennzeichnet durch**
eine Zusammensetzung (in Gew.-% auf Oxidbasis) von:
| | |
|---|---|
| SiO₂ | 71 - 72,5 |
| B₂O₃ | 7,5 - 10 |
| Al₂O₃ | 6 - 8,5 |
| Li₂O | 0,5 - 1,5 |
| Na₂O | 3 - 7,5 |
| K₂O | 0 - 4 |
| mit Li₂O + Na₂O + K₂O | 3,5 - 10,5 |
| MgO | 0 - 2 |
| CaO | 0 - 3 |
| SrO | 0 - 3 |
| BaO | 0 - 3 |
| ZnO | 0 - 1 |
| mit MgO+CaO+SrO+BaO+ZnO | 0 - 3 |
| ZrO₂ | 0,9 - 2 |
| CeO₂ | 0 - 1 |
sowie ggf. übliche Läutermittel in üblichen Mengen

4. Borosilicatglas nach wenigstens einem der Ansprüche 1 bis 3,
**gekennzeichnet durch**
eine Zusammensetzung (in Gew.-% auf Oxidbasis) von:
| | |
|---|---|
| SiO₂ | 71 - 72,5 |
| B₂O₃ | 7,5 - 10 |
| Al₂O₃ | 6,5 - 8,5 |
| Li₂O | 0,7 - 1,4 |
| Na₂O | 3,5 - 7,2 |
| K₂O | 0 - 4 |
| mit Li₂O + Na₂O + K₂O | 7 - 9,5 |
| MgO | 0 - 1 |
| CaO | 0,5 - 2 |
| mit MgO + CaO | 0,5 - 2 |
| ZrO₂ | 0,9 - 2 |
| CeO₂ | 0 - 0,3 |
sowie gegebenenfalls übliche Läutermittel in üblichen Mengen

5. Borosilicatglas nach wenigstens einem der Ansprüche 1 bis 4,
**dadurch gekennzeichnet,**
daß es zusätzlich enthält (in Gew.-% auf Oxidbasis):
| | |
|---|---|
| Fe₂O₃+Cr₂O₃+CoO | 0 - 1 |
| TiO₂ | 0 - 3 |

6. Borosilicatglas nach wenigstens einem der Ansprüche 1 bis 5 mit einem thermischen Ausdehnungskoeffizienten α _{20/300} zwischen 5,2 und 5,7 x 10⁻⁶/K und einer Verarbeitungstemperatur V_{A} von höchstens 1175 °C

7. Verwendung des Borosilicatglases nach wenigstens einem der Ansprüche 1 bis 6 als Verschmelzglas für Fe- Co- Ni-Legierungen.

8. Verwendung des Borosilicatglases nach wenigstens einem der Ansprüche 1 bis 6 als Geräteglas für Laboranwendungen und für den Chemieanlagenbau

9. Verwendung des Borosilicatglases nach wenigstens einem der Ansprüche 1 bis 6 als Pharmaprimärpackmittel, z. B. als Ampullenglas

## Claims

1. Zirconium oxide- and lithium oxide-containing borosilicate glass of high chemical resistance, characterized by a composition (in % by weight, based on oxide) of:
| | |
|---|---|
| SiO₂ | 71 - < 73 |
| B₂O₃ | 7 - 10 |
| Al₂O₃ | 5.5 - 9 |
| Li₂O | 0.5 - 2 |
| Na₂O | 0 - 10 |
| K₂O | 0 - 10 |
| with Li₂O + Na₂O + K₂O | 0.5 - 10.5 |
| MgO | 0 - 2 |
| CaO | 0 - 3 |
| SrO | 0 - 3 |
| BaO | 0 - 3 |
| ZnO | 0 - 3 |
| with MgO + CaO + SrO + BaO + ZnO | 0 - 3 |
| ZrO₂ | 0.8 - 3 |
| CeO₂ | 0 - 1 |
and optionally conventional fining agents in conventional amounts.

2. Borosilicate glass according to Claim 1,
characterized by a composition (in % by weight, based on oxide) of:
| | |
|---|---|
| SiO₂ | 71 - < 73 |
| B₂O₃ | 7 - 10 |
| Al₂O₃ | 6 - 8.5 |
| Li₂O | 0.5 - 1.5 |
| Na₂O | 3 - 7.5 |
| K₂O | 0 - 6 |
| with Li₂O + Na₂O + K₂O | 3.5 - 10.5 |
| MgO | 0 - 2 |
| CaO | 0 - 2 |
| SrO | 0 - 3 |
| BaO | 0 - 3 |
| ZnO | 0 - 3 |
| with MgO + CaO + SrO + BaO + ZnO | 0 - 3 |
| ZrO₂ | 0.9 - 2 |
| CeO₂ | 0 - 1 |
and optionally conventional fining agents in conventional amounts.

3. Borosilicate glass according to Claim 1 or 2, characterized by a composition (in % by weight, based on oxide) of:
| | |
|---|---|
| SiO₂ | 71 - 72.5 |
| B₂O₃ | 7.5 - 10 |
| Al₂O₃ | 6 - 8.5 |
| Li₂O | 0.5 - 1.5 |
| Na₂O | 3 - 7.5 |
| K₂O | 0 - 4 |
| with Li₂O + Na₂O + K₂O | 3.5 - 10.5 |
| MgO | 0 - 2 |
| CaO | 0 - 3 |
| SrO | 0 - 3 |
| BaO | 0 - 3 |
| ZnO | 0 - 1 |
| with MgO + CaO + SrO + BaO + ZnO | 0 - 3 |
| ZrO₂ | 0.9 - 2 |
| CeO₂ | 0 - 1 |
and optionally conventional fining agents in conventional amounts.

4. Borosilicate glass according to at least one of Claims 1 to 3, characterized by a composition of:
| | |
|---|---|
| SiO₂ | 71 - 72.5 |
| B₂O₃ | 7.5 - 10 |
| Al₂O₃ | 6.5 - 8.5 |
| Li₂O | 0.7 - 1.4 |
| Na₂O | 3.5 - 7.2 |
| K₂O | 0 - 4 |
| with Li₂O + Na₂O + K₂O | 7 - 9.5 |
| MgO | 0 - 1 |
| CaO | 0.5 - 2 |
| with MgO + CaO | 0.5 - 2 |
| ZrO₂ | 0.9 - 2 |
| CeO₂ | 0 - 0.3 |
and optionally conventional fining agents in conventional amounts.

5. Borosilicate glass according to at least one of Claims 1 to 4, characterized in that it additionally comprises (in % by weight, based on oxide):
| | |
|---|---|
| Fe₂O₃ + Cr₂O₃ + CoO | 0 - 1 |
| TiO₂ | 0 - 3 |

6. Borosilicate glass according to at least one of Claims 1 to 5, characterized in that it has a coefficient of thermal expansion α_{20/300} of from 5.2 to 5.7 x 10⁻⁶/K and a working point V_{A} of at most 1175°C.

7. Use of the borosilicate glass according to at least one of Claims 1 to 6 as sealing glass for Fe-Co-Ni alloys.

8. Use of the borosilicate glass according to at least one of Claims 1 to 6 as apparatus glass for laboratory applications and for the construction of chemical plant.

9. Use of the borosilicate glass according to at least one of Claims 1 to 6 as pharmaceutical primary packing, for example as ampoule glass.

## Revendications

1. Verre de borosilicate contenant de l'oxyde de zirconium et de l'oxyde de lithium, de haute résistance chimique, caractérisé par une composition (en % en poids sur base d'oxyde) de
| | |
|---|---|
| SiO₂ | 71-<73 |
| B₂O₃ | 7-10 |
| Al₂O₃ | 5,5-9 |
| Li₂O | 0,5-2 |
| Na₂O | 0-10 |
| K₂O | 0-10 |
| avec Li₂O+Na₂O+K₂O | 0,5-10,5 |
| MgO | 0-2 |
| CaO | 0-3 |
| SrO | 0-3 |
| BaO | 0-3 |
| ZnO | 0-3 |
| avec MgO+CaO+SrO+BaO+ZnO | 0-3 |
| ZrO₂ | 0,8-3 |
| CeO₂ | 0-1 |
ainsi que, le cas échéant, des agents usuels d'affinage en des quantités usuelles.

2. Verre de borosilicate selon la revendication 1, caractérisé par une composition (en % en poids sur base d'oxyde) de
| | |
|---|---|
| SiO₂ | 71-<73 |
| B₂O₃ | 7-10 |
| Al₂O₃ | 6-8,5 |
| Li₂O | 0,5-1,5 |
| Na₂O | 3-7,5 |
| K₂O | 0-6 |
| avec Li₂O+Na₂O+K₂O | 3,5-10,5 |
| MgO | 0-2 |
| CaO | 0-2 |
| SrO | 0-3 |
| BaO | 0-3 |
| ZnO | 0-3 |
| avec MgO+CaO+SrO+BaO+ZnO | 0-3 |
| ZrO₂ | 0,9-2 |
| CeO₂ | 0-1 |
ainsi que, le cas échéant, des agents usuels d'affinage en des quantités usuelles.

3. Verre de borosilicate selon les revendications 1 ou 2, caractérisé par une composition (en % en poids sur base d'oxyde) de
| | |
|---|---|
| SiO₂ | 71-72,5 |
| B₂O₃ | 7,5-10 |
| Al₂O₃ | 6-8,5 |
| Li₂O | 0,5-1,5 |
| Na₂O | 3-7,5 |
| K₂O | 0-4 |
| avec Li₂O+Na₂O+K₂O | 3,5-10,5 |
| MgO | 0-2 |
| CaO | 0-3 |
| SrO | 0-3 |
| BaO | 0-3 |
| ZnO | 0-1 |
| avec MgO+CaO+SrO+BaO+ZnO | 0-3 |
| ZrO₂ | 0,9-2 |
| CeO₂ | 0-1 |
ainsi que, le cas échéant, des agents usuels d'affinage usuels en des quantités usuelles.

4. Verre de borosilicate selon au moins l'une quelconques des revendications 1 à 3, caractérisé par une composition (en % en poids sur base d'oxyde) de
| | |
|---|---|
| SiO₂ | 71-72,5 |
| B₂O₃ | 7,5-10 |
| Al₂O₃ | 6,5-8,5 |
| Li₂O | 0,7-1,4 |
| Na₂O | 3,5-7,2 |
| K₂O | 0-4 |
| avec Li₂O+Na₂O+K₂O | 7-9,5 |
| MgO | 0-1 |
| CaO | 0,5-2 |
| avec MgO+CaO | 0,5-2 |
| ZrO₂ | 0,9-2 |
| CeO₂ | 0-0,3 |
ainsi que, le cas échéant, des agents usuels d'affinage en des quantités usuelles.

5. Verre de borosilicate selon au moins l'une quelconque des revendications 1 à 4, caractérisé en ce qu'il contient en outre (en % en poids sur base d'oxyde)
| | |
|---|---|
| Fe₂O₃+Cr₂O₃+CoO | 0-1 |
| TiO₂ | 0-3 |

6. Verre de borosilicate selon au moins l'une quelconque des revendications 1 à 5, avec un coefficient de dilatation thermique α_{20/300} entre 5,2 et 5,7 x 10⁻⁶/K et une température de transformation VA d'au maximum 1175°C.

7. Utilisation du verre de borosilicate selon au moins l'une quelconque des revendications 1 à 6 comme verre de jonction pour des alliages Fe-Co-Ni.

8. Utilisation du verre de borosilicate selon au moins l'une quelconque des revendications 1 à 6 comme verre d'appareillage pour des applications en laboratoire ou pour la construction d'installations chimiques.

9. Utilisation du verre de borosilicate selon au moins l'une quelconque des revendications 1 à 6 comme matériau d'emballage primaire pharmaceutique, par exemple comme verre pour ampoules.
